# EUROPÄISCHE PATENTSCHRIFT

(11) **EP 1 139 102 B1**
(45) Veröffentlichungstag und Bekanntmachung des Hinweises auf die Patenterteilung: **29.06.2005**
(21) Anmeldenummer: 01105841.9
(22) Anmeldetag: 09.03.2001
(51) Int. Cl.: G01P 1/14, G07C 5/12, G07C 7/00

(54) **Dichtanordnung für eine Schublade in einem Fahrtschreiber**
Seal arrangement for a tray in a tachograph
Système d'étanchéité pour un tiroir dans un enregistreur de marche

(30) Priorität: 31.03.2000 DE 20006037 U
(43) Veröffentlichungstag der Anmeldung: 04.10.2001
(73) Patentinhaber: SIEMENS AKTIENGESELLSCHAFT, 80333 München (DE)
(72) Erfinder: Wahler, Torsten, 78073 Bad Dürrheim (DE)

(56) Entgegenhaltungen:
- EP-A- 0 709 683
- CH-A- 501 805
- DE-A- 2 439 407
- DE-A- 3 427 122
- GB-A- 1 577 312
- US-A- 5 095 657

## Beschreibung

Die Erfindung betrifft eine Dichtanordnung für eine Schublade in einem Fahrtschreiber mit einem quaderförmigen Gehäuse, wobei die Schublade dem Wechseln von Aufzeichnungsmaterial dient, das Gehäuse eine Frontwand mit einer der Schublade zugeordneten Öffnung aufweist und die Schublade mit einer die Öffnung abdeckenden Blende versehen ist.

Bekanntlich muß bei Fahrtschreibern wegen des dokumentarischen Wertes der Aufzeichnungen auf Diagrammscheiben oder Druckbelegen ein hohes Maß an Eingriffs- und Verschmutzungssicherheit gefordert werden. Im Einsatzmilieu des Fahrtschreibers, vorzugsweise im Armaturenbereich von Nutzfahrzeugen, besteht jedoch eine relativ hohe Verschmutzungsgefahr, so dass Maßnahmen erforderlich sind, die das Eindringen von Staub und größeren Schmutzpartikeln oder auch das Eindringen von Wasser erschweren. Andererseits müssen Fahrtschreiber, um Diagrammscheiben wechseln oder Druckmaterial nachfüllen zu können, in geeigneter Weise zugänglich sein, das heißt, eine zwischen einem diesem Zweck dienenden aufklappbaren Deckel oder einer Schublade und dem Gehäuse des betreffenden Fahrtschreibers vorgesehene Dichtung muss derart ausgebildet sein, dass ihre Funktion auch bei mehrfachem täglichen Öffnen und Schließen der Schublade, wie dies im Falle der Verwendung von Diagrammscheiben als Aufzeichnungsträger bei Fahrerwechsel und Polizeikontrollen vorkommt, in ausreichendem Maße gewährleistet ist. Hinzu kommt, dass beispielsweise bei einer einer Schublade bzw. deren Öffnung im Gehäuse des Fahrtschreibers zugeordneten Dichtung ein relativ ungünstiger geometrischer Verlauf der Dichtlinie gegeben ist und dass eine geeignete Dichtanordnung zusätzlich den Bedingungen der Großserie gerecht werden muss und somit mit einem minimalen Aufwand zu realisieren ist.

Ein Anbringen eines gummielastischen Dichtelementes in herkömmlicher Weise durch Einstopfen in eine Nut oder durch Ankleben an einer dafür vorgesehenen Fläche der Blende der Schublade oder durch Ankleben innerhalb einer Fassung oder an einer Fläche, die die für die Schublade in der Frontwand des Fahrtschreibergehäuses vorgesehene Öffnung begrenzt, ist allein schon deshalb problematisch, weil ein Fahrtschreiber mit quaderförmigen Gehäuse eine relativ geringe Bauhöhe aufweist und somit für das Anbringen einer Dichtung nur ein sehr begrenzter Raum zu Verfügung steht. Außerdem macht ein derartiges Anbringen einer Dichtung eine aufwendige Handhabung und erhebliche Sorgfalt erforderlich, da die Frontflächen sowohl der Blende der Schublade als auch der Frontwand des Gehäuses in besonderer Weise sauberkeitsrelevant sind und Klebstoffreste im Bereich der Klebestellen oder Klebstofffäden auf den Frontflächen nicht akzeptiert werden können.

Aufgabe der vorliegenden Eerfindung war es daher, eine Dichtanordnung zu schaffen, welche an einem gattungsgemäßen Fahrtschreiber mit möglichst geringem Aufwand anbringbar ist und sich in besonderer Weise für die Serienfertigung eignet.

Die Lösung der Aufgabe ist dadurch gekennzeichnet, dass ein Dichtkörper vorgesehen ist, welcher aus einem biegesteifen Träger und einem an dem Träger befestigten gummielastischen Dichtelement besteht und dass innerhalb des Gehäuses dem Träger zugeordnete Verbindungsmittel vorgesehen sind derart, dass das Dichtelement durch Ineingriffbringen des Trägers mit den Verbindungsmitteln am Rand der der Schublade in der Frontwand zugeordneten Öffnung positionierbar ist.

Ein bevorzugtes Ausführungsbeispiel der erfindungsgemäß vorgeschlagenen Dichtanordnung sieht vor, dass der Träger im wesentlichen eine flache Leiste darstellt, deren Länge der Breite der Schubladenöffnung entspricht, dass an der Leiste der Höhe der Schubladenöffnung entsprechend lange Schenkel rechtwinklig angeformt sind, dass das Dichtelement sowohl an der Leiste als auch an den Schenkeln ausgebildet ist und dass an der Leiste auf der Gegenseite des Dichtelementes zwei in der Ebene der Leiste liegende Haltearme ausgebildet sind, wobei den Haltearmen Führungsnute zugeordnet sind, welche in auf einer im Gehäuse befestigbaren Montageplatine angeordneten Distanzkörpern ausgebildet sind.

Eine Ausführungsvariante ist außerdem dadurch gekennzeichnet, dass den Haltearmen spiegelbildlich Führungsnute zugeordnet sind und dass an den Haltearmen in entgegengesetzte Richtungen weisende Rastnasen ausgeformt sind.

Weitere vorteilhafte Ausgestaltungen der Eerfindung gehen aus den oben noch nicht erwähnten Unteransprüchen hervor.

Der entscheidende Vorteil der erfindungsgemäßen Dichtanordnung ist insbesondere darin zu sehen, dass das Dichtelement mittels einer Steckverbindung montierbar und in Funktionsstellung bringbar ist und gegebenenfalls ausgetauscht werden kann. Dabei ist sowohl eine kraftschlüssige als auch eine formschlüssige Verbindung denkbar. Ferner sei als Vorteil die angewandte Zwei-Komponenten-Spritzgießtechnik hervorgehoben, bei der der biegesteife Träger und das gummielastische Dichtelement als ein kostengünstiges und gut handhabbares Bauteil herstellbar ist. Erwähnenswert ist außerdem, dass zusätzlich zu den Steckverbindungsmitteln Stützelemente angeformt sein können, um eine weitere Stabilisierung der Lage des Dichtkörpers und somit des Dichtelementes zu erzielen. Beispielsweise können über die Länge des Trägers verteilt Öffnungen ausgebildet sein, die mit gehäusefest angeordneten Zungen oder Riegeln zusammenwirken, wodurch ein aufgrund der relativ großen Länge des Dichtkörpers mögliches, z. B. temperaturbedingtes Verbiegen des Trägers unterdrückbar ist.

Die bevorzugte Lösung, bei der an dem Träger lediglich Schenkel zur seitlichen Abdichtung der Schubladenöffnung ausgebildet sind, bietet im Gegensatz zu einem bei ausreichendem Raumangebot ebenfalls denkbaren vollständigen Dichtrahmen einen ausreichenden Schutz gegen Staubablagerungen innerhalb des Fahrtschreibers und gegen Spritzwasser bei minimalem Platzbedarf. Die v-förmige gegebenenfalls auch hohlkehlenartige Ausbildung des Dichtelementes ermöglicht es ferner, dass die Dichtanordnung in ihrer Dichtwirkung weitgehend toleranzunabhängig ist, insbesondere dass das Dichtelement einen für das Schließen einer Schublade erforderlichen Überhub formelastisch überbrückt.

Im folgenden sei die Eerfindung anhand der beigefügten Zeichnungen näher erläutert.

Es zeigen:
- Figur 1: eine perspektivische Teildarstellung eines gattungsgemäßen Fahrtschreibers mit teilweise geöffneter Schublade,
- Figur 2: eine Perspektivdarstellung des erfindungsgemäßen Dichtkörpers,
- Figur 3: eine perspektivische Untersicht des teilweise freigeschnittenen Bodenteils des Gehäuses mit eingebauter Montageplatine und daran befestigtem Dichtkörper,
- Figur 4: eine Teildarstellung der in Figur 3 gezeigten Komponenten in einer perspektivischen Ansicht von oben,
- Figur 5: eine teilweise Seitenansicht des Fahrtschreibers mit einem Ausbruch,
- Figur 6: einen Schnitt gemäß der Schnittlinie X in Figur 2,
- Figur 7: einen Schnitt gemäß der Schnittlinie Y in Figur 2.

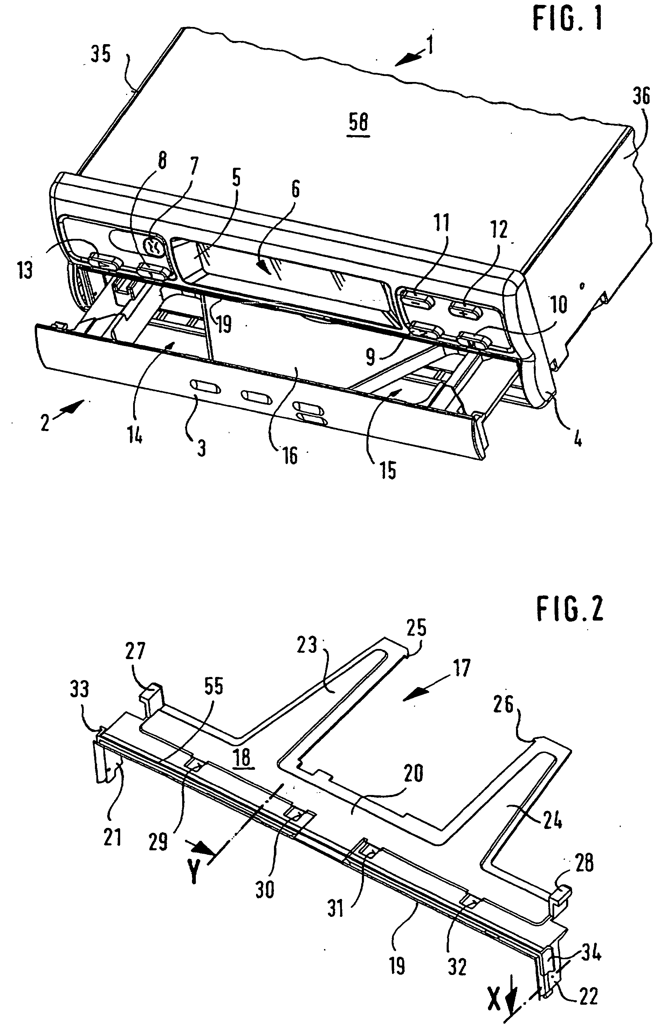

Ein in Figur 1 als Ausführungsbeispiel dargestellter Fahrtschreiber ist als Einbaugerät mit einem quaderförmigen Gehäuse 1 ausgebildet und mit einer Schublade 2 versehen. Letztere ist in geeigneten Führungsschienen gelagert, die, in Figur 1 nicht sichtbar, im Gehäuse 1 angeordnet sind. Frontseitig ist die Schublade 2 mit einer Blende 3 abgeschlossen, die sich bei geschlossener Schublade 2 harmonisch in eine dem Gehäuse 1 zugeordnete Frontwand 4 einfügt. Ein in der Frontwand 4 vorgesehener Fensterausschnitt 5 macht ein im Gehäuse 1 befestigtes Display 6 sichtbar; mit einer Plombe 7 ist der Zugang zu einer Diagnosebuchse gesichert. Mehrere durch die Frontwand 4 hindurchgreifende Tasten 8, 9, 10, 11, 12 und 13 dienen dem Fahrer und dem Beifahrer zum Anwählen wenigstens der wichtigsten Arbeitszeitdaten bzw. der Menüwahl, dem Vor- und Rückwärtsblättern in den jeweils angewählten Datensätzen sowie dem Freigeben der Schublade 2.

Mit 14 und 15 sind in der Schublade 2 vorgesehene Durchbrüche bezeichnet, welche die Entnahme einer eingelegten Diagrammscheibe erleichtern. 16 stellt eine Registrierunterlage für die in der üblichen Weise auf einer nicht dargestellten, mit einem Zentrierdom versehenen und uhrzeitrichtig angetriebenen Aufnahme festgehaltenen Diagrammscheiben dar.

Ein Dichtkörper 17, wie er in Figur 2 dargestellt ist, weist einen aus einem biegesteifen Thermoplast hergestellten Träger 18 auf, an welchem ein gummielastisch wirksames, elastomeres Dichtelement 19 spritzgießtechnisch angeformt ist. Im einzelnen wird der Träger 18 von einer flachen Leiste 20, deren Länge im wesentlichen der Breite der Schubladenöffnung im Gehäuse 1 entspricht, von an der Leiste 20 rechtwinklig angeformten Schenkeln 21 und 22 sowie von in der Ebene der Leiste 20 ausgebildeten Haltearmen 23 und 24 gebildet, wobei an den Haltearmen 23 und 24, die der Befestigung des Dichtkörpers 17 dienen in entgegengesetzte Richtungen weisende Rastnasen 25 und 26 angeformt sind. Ferner sind an dem Träger 18 Haken 27 und 28 und Öffnungen 29, 30, 31 und 32 vorgesehen, die zwar nicht zwingend erforderlich sind, die aber, was im folgenden noch näher erläutert wird, wegen der relativ großen Länge des Dichtkörpers 17 im Zusammenwirken mit gehäusefesten Bauelementen der Lagesicherung des Dichtkörpers 17 und als Anschläge bei dessen Montage dienen.

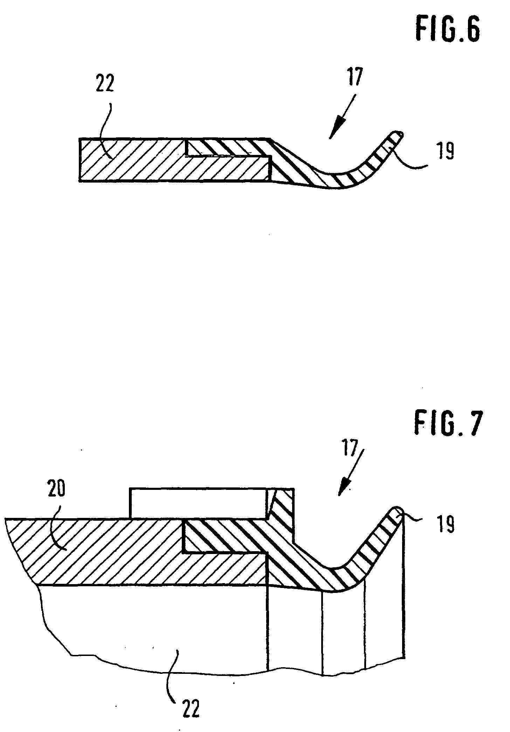

Der Vollständigkeit halber sei noch erwähnt, dass das Dichtelement 19, wie die Figur 7 zeigt, im Bereich der Leiste 20 rinnenartig ausgebildet ist und dass die den Schenkeln 21, 22 zugeordnete, im einzelnen nicht bezeichnete Abschnitte des Dichtelementes 19, gemäß Figur 6, vorzugsweise als flach abgewinkelte Dichtlappen angeformt sind. Ferner umfasst der elastomere Teil des Dichtkörpers 17 Dichtlippen 33 und 34, welche sich, wenn der Dichtkörper 17 montiert ist, in Anlage mit den nicht bezeichneten Stirnflächen der Seitenwände 35 und 36 des Bodenteils 37 des Gehäuses 1 befinden.

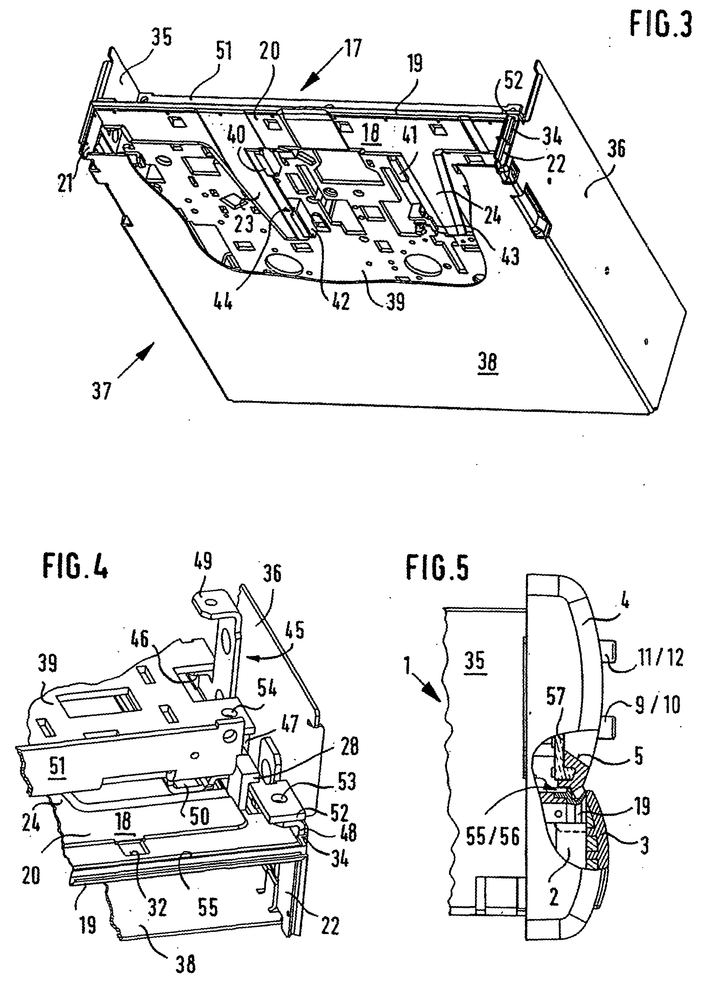

Die Figur 3 zeigt mit einem Freischnitt im Boden 38 des Bodenteils 37 die Anordnung des Dichtkörpers 17 an der Unterseite einer im Bodenteil 37 befestigten Montageplatine 39 des Fahrtschreibers. Die Montageplatine 39 ist als Outsertplatine ausgebildet und dient als Träger für die diversen Funktionsbaugruppen des Fahrtschreibers. Der besseren Übersicht halber ist die spritzgießtechnische Bestückung der Montageplatine 39 bis auf den Haltearmen 23, 24 zugeordnete Distanzkörper 40, 41, 42 und 43 nicht dargestellt. Der formschlüssigen Aufnahme bzw. der Führung der Haltearme 23, 24 während der Montage des Dichtkörpers 17 dienen in den Distanzkörpern 40, 41, 42 und 43 vorgesehene Schlitze, von denen einer mit 44 bezeichnet ist. Bei der Montage des Dichtkörpers 17, das heißt, beim Einführen der Haltearme 23, 24 in die Schlitze 44 dienen die nicht bezeichneten Schenkel der Haken 27, 28 (Fig. 2) im Zusammenwirken mit einer Stirnfläche der Montageplatine 39 als Anschläge. Es ist aber auch denkbar, dass auf der Montageplatine 39 befestigte Bauteile, beispielsweise die Distanzkörper 40 und 41 der Leiste 20 und somit dem Dichtkörper 17 als Anschlag dienen. Im angeschlagenen Zustand des Dichtkörpers 17 hintergreifen die Haltearme 23, 24 bzw. die Rastnasen 25, 26 die Distanzkörper 42 und 43.

Aus der Figur 4 geht hervor, dass an der Innenseite der Seitenwand 36 - gleiches gilt für die Seitenwand 35 - des Gehäuses 1 ein Gehäusebauteil 45 befestigt ist, an dem Konsolen 46, 47, 48, 49 für die Auflage und Befestigung der Montageplatine 39 und für eine die elektronischen Bauteile des Fahrtschreibers tragende Leiterplatte angeformt sind. Außerdem sind an den Gehäusebauteilen 45 Führungsschienen für die Schublade 2 angeformt, die, weil nicht erfindungswesentlich, nur andeutungsweise dargestellt und mit 50 bezeichnet sind. Wie aus der Figur 4 ferner hervorgeht ist an der Montageplatine 39 ein Wandelement 51 angeformt, welches der Befestigung der Display- und Tastenbaugruppe des Fahrtschreibers dient. Ein mit 52 bezeichneter Arm der Montageplatine 39 dient einerseits dem Haken 28 des Dichtkörpers 19 als Auflage andererseits hat eine in dem Arm 52 vorgesehene Durchgangsbohrung 53 zusätzlich zur mittelbaren von Montageplatine 39 und Bodenteil 37 eine Ausrichtfunktion für das Befestigen der Frontwand 4 an der Konsole 48 mittels einer Schraubverbindung. Mit 54 ist eine weitere Durchgangsbohrung für eine Schraubverbindung zwischen dem Bodenteil 37 und der Montageplatine 39 bezeichnet.

Die Figur 5 zeigt insbesondere den v-förmigen bzw. rinnenartigen Querschnitt des Dichtelementes 19 entlang der Leiste 20. Ferner geht aus der Figur 5 hervor, dass eine an dem Dichtelement 19 ausgebildete Rippe 55 mit einem an der Frontwand 4 vorgesehenen Hinterschnitt 56 in Wirkverbindung steht, wenn die Frontwand 4 montiert ist. Eine dem Display 6 zugeordnete Sichtscheibe, die mit der Frontwand 4 spritzgießtechnisch verbunden ist, ist mit 57 bezeichnet. 58 stellt das Deckelteil des Gehäuses 1 dar.

Abschließend sei noch erwähnt, dass die dem Dichtkörper 17 gehäuseseitig zugeordneten Distanzkörper 40, 41, 42, 43 auch an einer Leiterplatte anbringbar sind oder dass die Befestigung des Dichtkörpers 17 beispielsweise an einem Zwischenboden, einer Zwischenwand oder anderen Gehäusestrukturen erfolgen kann, wobei ein oder mehrere Haltearme 23, 24 beispielsweise auch rechtwinklig zur Ebene der Leiste 20 ausgebildet sein können.

## Patentansprüche

1. Dichtanordnung für eine Schublade in einem Fahrtschreiber mit einem quaderförmigen Gehäuse, wobei die Schublade dem Wechseln von Aufzeichungsmaterial dient, das Gehäuse eine Frontwand mit einer der Schublade zugeordneten Öffnung aufweist und die Schublade mit einer die Öffnung abdeckenden Blende versehen ist, wobei ein Dichtkörper (17) vorgesehen ist, welcher aus einem biegesteifen Träger (18) und einem an dem Träger (18) befestigten gummielastischen Dichtelement (19) besteht und wobei innerhalb des Gehäuses (1) dem Träger (18) zugeordnete Verbindungsmittel (23/25, 24/26, 40/42, 41/43, 27/28) vorgesehen sind derart, dass das Dichtelement (19) durch Ineingriffbringen des Trägers (18) mit den Verbindungsmitteln am Rand der der Schublade (2) in der Frontwand (4) zugeordneten Öffnung positionierbar ist,
wobei der Träger (18) im Wesentlichen eine flache Leiste (20) darstellt, deren Länge der Breite der Schubladenöffnung entspricht und
an dem Träger (18) einerseits das Dichtelement (19) andererseits wenigstens ein in der Ebene der Leiste (20) liegender Haltearm (23) spritzgießtechnisch angeformt sind,
wobei dem Haltearm (23) wenigstens ein Schlitz (44) zugeordnet ist und
der Schlitz (44) in einem auf einer im Gehäuse (1) befestigbaren Montageplatine (39) angeordneten Distanzkörper (40/42) ausgebildet ist, welche Montageplatine Trägerin für diverse Funktionsbaugruppen des Fahrtschreibers ist.

2. Dichtanordnung nach Anspruch 1, **dadurch gekennzeichnet,**
**dass** an der Leiste (20) der Höhe der Schubladenöffnung entsprechend lange Schenkel (21, 22) rechtwinklig angeformt sind und
**dass** das Dichtelement (19) sowohl an der Leiste (20) als auch an den Schenkeln (21, 22) ausgebildet ist.

3. Dichtanordnung nach Anspruch 1, **dadurch gekennzeichnet, dass** der Träger (18) als ein in die Schubladenöffnung passender Rahmen ausgebildet ist.

4. Dichtanordnung nach Anspruch 1, **dadurch gekennzeichnet, dass** das Dichtelement (19) stoff- und formelastisch ausgebildet ist.

5. Dichtanordnung nach Anspruch 4, **dadurch gekennzeichnet, dass** das Dichtelement (19) einen v-förmigen Querschnitt aufweist.

6. Dichtanordnung nach Anspruch 1, **dadurch gekennzeichnet, dass** an dem Haltearm (23) eine Rastnase (25) ausgebildet ist und
dass der Haltearm (23) im Zusammenwirken mit dem Distanzkörper (40/42) eine Riegelfunktion ausübt.

7. Dichtanordnung nach Anspruch 1, **dadurch gekennzeichnet, dass** zwei in der Ebene der Leiste (20) liegende Haltearme (23, 24) ausgebildet sind,
dass den Haltearmen (23, 24) in an der Montageplatine (39) angebrachten Distanzkörpern (40/42, 41/43) spiegelbildlich Schlitze (44) zugeordnet sind und
dass an den Haltearmen (23, 24) in entgegen gesetzte Richtungen weisende Rastnasen (25, 26) ausgeformt sind.

8. Dichtanordnung nach Anspruch 1, **dadurch gekennzeichnet,**
**dass** an dem Träger (18) Stützelemente (27, 28, und 29, 30, 31, 32) ausgebildet sind und
**dass** gehäuseseitig mit den Stützelementen (27, 28 und 29, 30, 31, 32) des Trägers (18) zusammenwirkende Strukturen vorgesehen sind.

## Claims

1. Seal arrangement for a tray in a tachograph having a cuboid housing, the tray serving for the changing of plotting material, the housing having a front wall with an opening assigned to the tray and the tray being provided with a face trim covering the opening, a sealing member (17) being provided, which comprises a flexurally rigid carrier (18) and a rubber-elastic sealing element (19) fixed to the carrier (18), and connecting devices (23/25, 24/26, 40/42, 41/43, 27/28) assigned to the carrier (18) being provided inside the housing (1), in such a way that the sealing element (19) can be positioned at the edge of the opening assigned to the tray (2) in the front wall (4) by bringing the carrier (18) into engagement with the connecting devices,
the carrier (18) essentially constituting a flat strip (20), the length of which corresponds to the width of the tray opening, and
the sealing element (19), on the one hand, and at least one retaining arm (23) lying in the plane of the strip (20), on the other, being injection moulded onto the carrier (18),
at least one slot (44) being assigned to the retaining arm (23) and
the slot (44) being formed in a spacer (40/42) arranged on a mounting plate (39) that can be fixed in the housing (1), the mounting plate being a carrier for various functional sub-assemblies of the tachograph.

2. Seal arrangement according to Claim 1, **characterized in that** long legs (21, 22) corresponding to the height of the tray opening are moulded onto the strip (20) at right angles, and that the sealing element (19) is formed both on the strip (20) and on the legs (21, 22).

3. Seal arrangement according to Claim 1, **characterized in that** the carrier (18) is designed as a frame fitting into the tray opening.

4. Seal arrangement according to Claim 1, **characterized in that** the sealing element (19) is materially elastic and of flexible shape.

5. Seal arrangement according to Claim 4, **characterized in that** the sealing element (19) has a V-shaped cross-section.

6. Seal arrangement according to Claim 1, **characterized in that** a detent catch (25) is formed on the retaining arm (23) and that the retaining arm (23), through interaction with the spacer (40/42), exercises a locking function.

7. Seal arrangement according to Claim 1, **characterized in that** two retaining arms (23, 24) situated in the plane of the strip (20) are formed, that laterally inverted slots (44) in spacers (40/42, 41/43) fitted to the mounting plate (39) are assigned to the retaining arms (23, 24), and that detent catches (25, 26) facing in opposite directions are formed on the retaining arms (23, 24).

8. Seal arrangement according to Claim 1, **characterized in that** support elements (27, 28 and 29, 30, 31, 32) are formed on the carrier (18) and that structures are provided on the housing side which interact with the support elements (27, 28 and 29, 30, 31, 32) of the carrier (18).

## Revendications

1. Système d'étanchéité destiné à un tiroir dans un contrôleur de marche à boîtier parallélépipédique, où le tiroir sert à changer des produits d'enregistrement, où le boîtier a une paroi avant avec une ouverture correspondant au tiroir et où le tiroir est muni d'un cache fermant l'ouverture, où il est prévu un corps d'étanchéité (17), qui se compose d'un support (18) résistant à la flexion et d'un élément d'étanchéité (19) élastique en caoutchouc fixé au support (18) et où, à l'intérieur du boîtier (1), des moyens de liaison (23/25, 24/26, 40/42, 41/43, 27/28) correspondant au support (18) sont prévus de telle manière que l'élément d'étanchéité (19) peut être positionné en mettant le support (18) en prise avec les moyens de liaison sur le bord de l'ouverture correspondant au tiroir (2) dans la paroi avant (4),
le support (18) constituant pour l'essentiel une plaquette plate (20) dont la longueur correspond à la largeur de l'ouverture du tiroir et,
d'une part, l'élément d'étanchéité (19), d'autre part, au moins une patte de retenue dans le plan de la plaquette (20) étant ménagés par moulage par injection sur le support (18),
au moins une fente (44) correspondant à la patte de retenue (23) et
la fente (44) étant ménagée dans une pièce d'écartement (40/42) disposée sur une platine de montage (39) fixée dans le boîtier (1), alors que la platine de montage supporte divers modules fonctionnels du contrôleur de marche.

2. Système d'étanchéité selon la revendication 1 **caractérisé par le fait que**, sur la plaquette (20), sont ménagées des ailes perpendiculaires (21, 22) correspondant à la hauteur de l'ouverture du tiroir
et
que l'élément d'étanchéité (19) est disposé non seulement sur la plaquette (20), mais aussi sur les ailes (21, 22).

3. Système d'étanchéité selon la revendication 1 **caractérisé par le fait que** le support (18) est conçu sous la forme de cadre adapté à l'ouverture du tiroir.

4. Système d'étanchéité selon la revendication 1 **caractérisé par le fait que** l'élément d'étanchéité (19) est élastique par sa matière et par sa forme.

5. Système d'étanchéité selon la revendication 4 **caractérisé par le fait que** l'élément d'étanchéité (19) a une section en forme de v.

6. Système d'étanchéité selon la revendication 1 **caractérisé par le fait qu'**un bec encliquetable (25) est ménagé sur la patte de retenue (23)
et
que la patte de retenue (23) a une fonction de verrouillage en interaction avec la pièce d'écartement (40/42).

7. Système d'étanchéité selon la revendication 1 **caractérisé par le fait que** deux pattes de retenue (23, 24) sont prévues dans le plan de la plaquette (20),
que des fentes (44) dans des pièces d'écartement (40/42, 41/43) montées sur la platine de montage (39) correspondent inversement aux pattes de retenue (23, 24) et
que, sur les pattes de retenue (23, 24), sont ménagés des becs encliquetables (25, 26) orientés dans des directions opposées.

8. Système d'étanchéité selon la revendication 1 **caractérisé par le fait que** des éléments supports (27, 28 et 29, 30, 31, 32) sont ménagés sur le support (18) et
que, du côté du boîtier, sont prévues des structures agissant avec les éléments supports (27, 28 et 29, 30, 31, 32) du support (18).
